# NEUE EUROPÄISCHE PATENTSCHRIFT

(11) **EP 2 732 995 B2**
(45) Veröffentlichungstag und Bekanntmachung des Hinweises auf die Entscheidung über den Einspruch: **21.03.2018**
(45) Hinweis auf die Patenterteilung: 07.01.2015
(21) Anmeldenummer: 12192803.0
(22) Anmeldetag: 15.11.2012
(51) Int. Cl.: B60H 1/22, F24H 9/20, H05B 1/02

(54) **Elektrische Heizung für ein Kraftfahrzeug**
Electric heater for a motor vehicle
Chauffage électrique pour véhicule automobile

(43) Veröffentlichungstag der Anmeldung: 21.05.2014
(73) Patentinhaber: Eberspächer catem GmbH & Co. KG, 76863 Herxheim (DE)
(72) Erfinder: Reiß, Holger, 76764 Rheinzabern (DE); Morgen, Christian, 76761 Rülzheim (DE); Niederer, Michael, 76889 Kapellen-Drusweiler (DE)
(74) Vertreter: Grünecker Patent- und Rechtsanwälte PartG mbB

(56) Entgegenhaltungen:
- EP-A2- 1 361 089
- EP-B1- 1 054 313
- CN-Y- 2 249 690
- DE-A1- 10 209 578
- FR-A1- 2 878 316
- US-A- 4 944 454
- US-A- 5 184 355
- US-A- 5 788 148
- US-A1- 2002 046 831
- US-A1- 2003 183 619
- US-A1- 2004 218 912
- US-A1- 2005 061 798
- US-A1- 2009 272 727

## Beschreibung

Die vorliegende Erfindung betrifft eine elektrische Heizvorrichtung für ein Kraftfahrzeug. Insbesondere betrifft die vorliegende Erfindung eine elektrische Heizvorrichtung, die PTC-Elemente aufweist, welche zur Erwärmung eines Luftstroms verwendet werden.

Es ist bekannt, dass elektrische Heizungen im Kraftfahrzeug zum Beispiel als Zusatzheizer zum Einsatz kommen, um die Beheizung des Kraftfahrzeuginnenraums und anderer Komponenten, die primär durch die Abwärme des Motors erfolgt, zu ergänzen, oder zum Beispiel auch ein Heizen im Stillstand des Fahrzeugs zu ermöglichen.

Im Stand der Technik ist bekannt, für diese Zwecke elektrische Heizvorrichtungen mit sogenannten Widerstandsheizelementen, auch bezeichnet als PTC (positive temperature coefficient)-Heizelemente einzusetzen. Diese sind selbstregelnd, da sie mit zunehmender Erwärmung einen höheren Widerstand zeigen, und somit bei gleicher Spannung eine geringere Menge an Strom durchlassen. Somit heizen sich die PTC-Elemente maximal auf eine definierte Temperatur auf. Die selbstregelnden Eigenschaften der PTC-Heizelemente verhindern deshalb eine Überhitzung. Die Oberflächentemperatur eines PTC-Elementes kann eine bestimmte maximale Oberflächentemperatur im Betrieb mit der vorgegebenen Betriebsspannung nicht überschreiten. Diese maximale Oberflächentemperatur ist kennzeichnend für ein PTC-Heizelement. Die von den PTC-Elementen erzeugte Wärme wird an ein fluides Medium, insbesondere an einen Luftstrom oder einen Wasserstrom abgegeben. Die vorliegende Erfindung betrifft Heizvorrichtungen, bei denen ein Luftstrom als Wärmeträger dient.

Von besonderer Bedeutung sind elektrische Heizungen bei Fahrzeugen mit Elektro- oder Hybridantrieb, bei denen die Antriebseinheit des Kraftfahrzeugs keine oder keine ausreichende Abwärme zur Erwärmung oder Klimatisierung des Fahrzeugs abgibt. Weiterhin ist es von Vorteil, wenn sich eine Heizvorrichtung für Elektro-oder Hybridfahrzeuge dazu eignet, neben der Versorgung des Innenraums des Kraftfahrzeugs mit der erforderlichen Heizwärme auch die für die ablaufenden Prozesse in einzelnen Anlagenteilen des Kraftfahrzeugs erforderliche oder zumindest diese fördernde Wärme bereitzustellen, wie zum Beispiel zur Vorwärmung des Fahrzeugakkumulators.

Elektrische Heizvorrichtungen für ein Elektro- oder Hybridfahrzeug müssen deshalb leistungsstärker dimensioniert sein als PTC-Heizvorrichtungen, die zum Beispiel als Zusatzheizer in einem herkömmlichen Kraftfahrzeug zum Einsatz kommen, und weisen daher eine Reihe von Besonderheiten auf.

Zunächst sind die in Elektro- und Hybridfahrzeugen verwendeten Heizvorrichtungen für eine Betriebsspannung im automobiltechnischen Hochvoltbereich (oberhalb von 60 Volt, vorzugsweise einige hundert Volt (z. B. 300 Volt, 380 Volt oder 500 Volt)) vorgesehen, da die verwendeten Fahrzeugbatterien eine solche Bordnetzspannung zur Verfügung stellen. Die Heizleistung derartiger Hochvoltheizer liegt in der Größenordnung von 5 bis 6 kW (Kilowatt), gegenüber einer Größenordnung von 1 kW (z. B. 1,2 kW) bei konventionellen elektrischen Zusatzheizern für Kraftfahrzeuge. Dementsprechend enthält ein solcher Hochvolt-Heizer wesentlich mehr PTC-Heizelemente als eine konventionelle elektrische Zusatzheizung, vorzugsweise mehr als 50, weiter vorzugsweise zwischen 50 und 100, zum Beispiel ca. 60 PTC-Heizelemente gegenüber 10 bis 12 im konventionellen Kraftfahrzeug.

Damit ergibt sich das Problem, die größere Heizleistung an den zu erwärmenden Luftstrom zu übertragen. Hierfür sind prinzipiell zwei Lösungen möglich.

Zum ersten kann die Leistung durch Vergrößerung der von der strömenden Luft kontaktierten Heizeroberfläche erhöht werden. Der Prozess des Wärmeübergangs von der Heizeroberfläche auf den Luftstrom wird zusätzlich durch von der Heizeroberfläche ausgesendete Strahlungswärme unterstützt. Eine Vergrößerung der Heizeroberfläche stößt jedoch beim Einsatz in einem Kraftfahrzeug an ihre Grenzen, da die Größe des Bauraums beim Einbau in ein Heiz-/Klimagerät fest vorgegeben ist.

Zum zweiten kann die übertragene Leistung auch durch eine Erhöhung der Oberflächentemperatur der Heizung erhöht werden. Da hierbei ein größerer Temperaturgradient zwischen der Heizeroberfläche und der strömenden Luft auftritt, kann in der gleichen Zeit mehr Wärme übertragen werden als bei geringerer Oberflächentemperatur. Indem man die Oberflächentemperatur der Heizung gegenüber konventionellen Zusatzheizern erhöht, lässt sich eine Vergrößerung der Oberfläche vermeiden oder zumindest gering halten. Deshalb ist die zweite Möglichkeit der Erhöhung der Leistungsübertragung an die zu erwärmende Luft besonders für Hochvoltheizvorrichtungen für Fahrzeuge mit Elektroantrieb (Elektro- oder Hybridfahrzeuge) geeignet. Hierbei werden spezielle PTC-Heizelemente eingesetzt, die im Betrieb höhere Oberflächentemperaturen erreichen können als die in konventionellen PTC-Heizern eingesetzten Heizelemente. Eine Konsequenz ist jedoch, dass diese PTC-Heizelemente eine andere (hin zu höheren Temperaturen verschobene) Widerstands- beziehungsweise Leistungscharakteristik haben, und somit erst bei höheren Temperaturen automatisch abregeln.

Daraus ergibt sich jedoch ein zusätzliches Problem der Gewährleistung der Sicherheit bzw. des Schutzes der die Heizvorrichtung umgebenden Komponenten des Kraftfahrzeugs gegen Schäden durch Überhitzung.

Grundsätzlich ist es so, dass im Störungsfall, wenn die Luftzufuhr unterbrochen wird, insbesondere wenn das den Luftstrom erzeugende Gebläse ausfällt, sich die Oberflächentemperatur des PTC-Heizelementes auf die maximale PTC-Oberflächentemperatur erhöht. Dabei reduziert sich die elektrische Leistung auf einen Wert, der nur noch einem Bruchteil der maximal möglichen Leistung entspricht, und die Temperatur erhöht sich nicht weiter bzw. die PTC-Heizelemente kühlen langsam wieder ab.

Eine entsprechende Störung kann ebenfalls auftreten, wenn bei Ansteuerung einer elektrischen Heizung die Luftzufuhr deutlich vermindert oder unterbrochen wird, ohne dass die zu erzeugende Wärmemenge (vorgegebene Leistung) entsprechend reduziert wird. Eine solche Situation kann bei Störung innerhalb einer automatischen Heizungssteuerung oder auch bei manueller Einstellung einer Heizung in Folge Fehlbedienung auftreten.

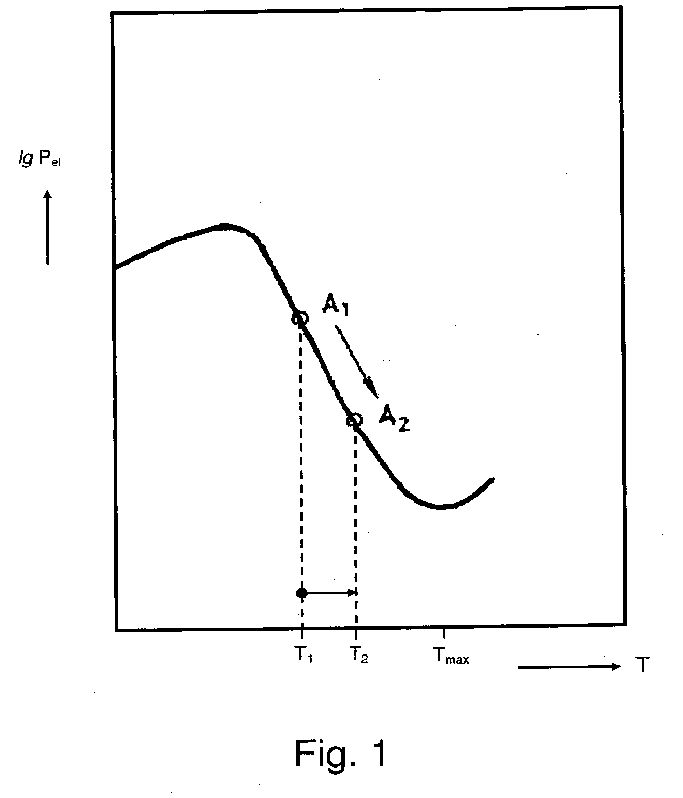

Die Temperaturabhängigkeit der von dem PTC-Element in Wärme umgesetzten elektrischen Leistung Pₑₗ ist in Fig. 1 über der Oberflächentemperatur des PTC-Elementes dargestellt. Bei einer gegebenen Betriebsspannung stellt sich im PTC-Element ein Arbeitspunkt in Abhängigkeit von der Umgebungstemperatur, d.h. der Temperatur des aufzuheizenden Mediums (Luft) und der Wärmeleitung vom PTC-Element zum aufzuheizenden Medium ein. Ein solcher Arbeitspunkt ist mit dem Arbeitspunkt A₁ bei der Temperatur T₁ in Fig. 1 dargestellt.

Heizt sich das PTC-Element aufgrund einer Störung im Luftstrom auf, so kann die im PTC-Element umgesetzte Wärmemenge nicht mehr abgeführt werden. Das PTC-Element nimmt dann eine höhere Temperatur ein. Sein Arbeitspunkt auf der Kennlinie verschiebt sich weiter nach unten, wie in Fig. 1 mit dem neuen Arbeitspunkt A₂ bei der Temperatur T₂ angegeben. Dabei reduziert sich die abgegebene Wärme und damit auch die Stromaufnahme deutlich.

Der dem Minimum der in dem Diagramm dargestellten Kurve entsprechende Wert, Tₘₐₓ, stellt die im Betrieb maximal erreichbare Oberflächentemperatur des PTC-Heizelements dar. Bei weiterer künstlicher Erhöhung der Temperatur sinkt der Widerstand des Heizelementes wieder (NTC-Effekt-"negative temperature coefficient"), und das Heizelement zerstört sich selbst.

In konventionellen elektrischen Luftheizvorrichtungen wurden PTC-Elemente verwendet, bei denen die maximal im Betrieb erreichbaren Oberflächentemperaturen des PTC-Elementes selbst (Temperaturen, bei denen die PTC-Elemente aufgrund des hohen Widerstands selbsttätig abregeln) bei höchstens etwa 170°C liegen. In diesem Bereich tritt noch keine Beschädigung der Umgebung auf, da selbst bei Ausfall der Wärme abtransportierenden Luftströmung die Temperaturen im Umgebungsbereich der Heizvorrichtung noch gut von den dort verwendeten Materialien vertragen werden (z. B. den Kunststoffen, die im Heiz-/Klimagerät üblicherweise verwendet werden).

Um eine Störung, insbesondere einen Ausfall des Gebläses, sicher erkennen zu können, ist es bei Verwendung von PTC-Heizelementen, die keine höheren Oberflächentemperaturen als etwa 170°C erreichen können, ausreichend, einen Leistungsschwellwert zu definieren, der einer minimalen, im Normalbetrieb auftretenden Heizerleistung entspricht. Wenn durch das selbsttätige Abregeln die Heizerleistung unter einen solchen Leistungsschwellwert sinkt, kann man sicher davon ausgehen, dass die PTC-Heizelemente automatisch abgeregelt haben und eine Lüfterstörung vorliegt. Eine solche Vorgehensweise ist in der europäischen Patentschrift EP 1 350 647 B1 beschrieben.

Wie bereits erwähnt, ist es jedoch bei den Hochvolt-Heizern für Fahrzeuge mit Elektroantrieb vorteilhaft, PTC-Elemente zu verwenden, die erst bei deutlich höheren Temperaturen abregeln, dafür aber auch im Regelbetrieb höhere Oberflächentemperaturen gestatten. Die maximal mögliche Oberflächentemperatur der PTC-Heizelemente selbst liegt jetzt in einem Bereich von 180°C oder höher, vorzugsweise etwas oberhalb von 200°C, zum Beispiel 205°C. Solche Heizelemente ermöglichen auch eine höhere Betriebstemperatur der Wärme abstrahlenden Oberflächen der Heizvorrichtung, zum Beispiel Radiatoren, was sich wiederum insbesondere bei beschränktem Einbauraum vorteilhaft auf die Wärmeleistung auswirkt.

Wie erwähnt, werden die aufgrund der Charakteristik maximal möglichen Oberflächentemperaturen der PTC-Elemente dann erreicht, wenn der Luftstrom ausfällt (oder zumindest die Strömungsgeschwindigkeit deutlich absinkt). Im Normalbetrieb sorgt dagegen die strömende Luft dafür, dass ausreichend Wärme abgeführt wird, und die Oberflächentemperatur der PTC-Heizelemente immer unterhalb des maximal möglichen Werts bleibt. Bei konventionellen Heizern mit einer maximalen PTC- Oberflächentemperatur von 170°C liegt die normale Arbeitstemperatur bei eingeschaltetem Lüfter in einem Bereich von ca. 110°C. Bei den im Rahmen der Erfindung verwendeten PTC-Elementen, insbesondere für Hochvoltheizer, liegt sie um mindestens etwa 20 bis 30 Grad, zum Beispiel 25 Grad, höher.

Bei einer Überhitzung aufgrund einer Lüfterstörung/eines Lüfterausfalls drohen insbesondere folgende Gefahren:
Erstens, die Umgebung der Heizvorrichtung, insbesondere der Kunststoff des Heiz-/Klimagerätes kann beschädigt werden, insbesondere schmelzen.

Zweitens, wenn nach einem Lüfterausfall der Lüfter wieder anspringt, so wird eine aufgrund des Hitzestaus innerhalb der Heizvorrichtung entstandene Luftwolke mit einer Temperatur von ca. 200°C weitergeleitet. Dies birgt eine erhebliche Verletzungsgefahr im Fahrgastraum.

Demzufolge ist ein zusätzlicher Sicherheitsmechanismus erforderlich, der das Heiz-/Klimagerät vor Beschädigungen (insbesondere Schmelzen des Kunststoffs) und die Fahrzeuginsassen vor Verletzung durch zu heiße Luft schützt.

Auf das selbsttätige Abregeln der PTC-Heizelemente kann hierbei nicht zurückgegriffen werden, da wie beschrieben die maximal erreichbaren Temperaturen der verwendeten PTC-Heizelemente so hoch sind, dass bereits vor deren Erreichen Beschädigungen auftreten können, also ein externes Eingreifen erforderlich ist.

Es ist zwar durchaus bekannt, für verschiedene Zwecke der Steuerung/Regelung von Fahrzeugheizungen/Klimaanlagen Temperaturfühler im Luftstrom zu platzieren. Eine solche Anordnung ist zum Beispiel in der EP1 516 761 A1 beschrieben. Hierbei ist ein Temperatursensor so angeordnet, dass er im Luftstrom der aufzuheizenden Luft liegt und die Temperatur der zuströmenden Luft erfasst und an die Steuerschaltung der Heizvorrichtung weitergibt.

Elektrische Kraftfahrzeugheizungen mit Heizelementen ohne Selbstregelungseffekt, bei denen eine Temperaturüberwachung mit einem Temperatursensor erfolgt, sind auch aus den Druckschriften FR 2 878 361 welche die Merkmale des Oberbegriffs des Anspruchs 1 zeigt und EP 1 361 089 A2 bekannt.

Im vorliegenden Fall geht jedoch die Gefahr für das Heiz-/Klimagerät nicht nur von der (erwärmten) Luft aus, sondern insbesondere von der Strahlungswärme der PTC-Heizelemente/Heizeroberfläche. Eine Messung einer Temperatur des Luftstroms durch die Verwendung eines Temperaturfühlers im Luftstrom ist deshalb im vorliegenden Fall zumindest für die Abwehr der von Schäden an Umgebungskomponenten nicht geeignet. Die gemessene Temperatur wird bei Messung im Luftstrom stark durch äußere Faktoren, wie Lufttemperatur und Strömungsgeschwindigkeit, beeinflusst, so dass sie keine eindeutigen Rückschlüsse auf die PTC-Oberflächentemperatur zulässt.

Andererseits scheidet eine direkte Messung der Temperatur an der Oberfläche der PTC-Heizelemente aus konstruktiven Gründen aus.

Es ist Aufgabe der vorliegenden Erfindung, eine verbesserte, insbesondere für den Einsatz in Fahrzeugen mit Elektroantrieb geeignete elektrische Heizvorrichtung für ein Kraftfahrzeug, bei der Gefahren durch Überhitzung sicher erkannt und vermieden werden können, sowie ein entsprechendes Betriebsverfahren bereitzustellen.

Diese Aufgabe wird mit den Merkmalen der unabhängigen Patentansprüche gelöst.

Es ist der besondere Ansatz der vorliegenden Erfindung, eine Oberflächentemperatur eines elektrischen PTC-Heizers permanent zu überwachen. Zu diesem Zweck erfolgt eine Messung der Temperatur mit einem Temperatursensor, der so angeordnet ist, dass sein Messergebnis durch Wärrmestrahlung und/oder Wärmeleitung und somit weitgehend unabhängig von äußeren Einflüssen auf eine aktuelle Oberflächentemperatur der PTC-Heizelemente schließen lässt. Dadurch kann eine Überhitzung, insbesondere durch Lüfterausfall, selbst dann zuverlässig erkannt werden, wenn die maximale Oberflächentemperatur der PTC-Elemente, bei der diese selbstständig abregeln, höher ist, als die aus Sicherheitsgründen im Betrieb maximal zulässige Oberflächentemperatur, wie dies insbesondere bei Hochvoltheizvorrichtungen für Hybrid- oder Elektrofahrzeuge der Fall ist.

Es wird also erfindungsgemäß gerade nicht eine Temperatur des Luftstroms gemessen. Diese hängt neben der Heizertemperatur auch von einer Vielzahl weiterer Parameter, insbesondere der Ausgangstemperatur der zu erwärmenden Luft und der Strömungsgeschwindigkeit ab. Vielmehr wird der Temperatursensor so angeordnet, dass er die indirekte Bestimmung der PTC-Oberflächentemperatur nur basierend auf Wärmestrahlung und/oder Wärmeleitung (also nicht über den Luftstrom) ermöglicht.

Indirekte Bestimmung der PTC-Oberflächentemperatur bedeutet, dass die von dem Sensor gemessene Temperatur in möglichst guter Näherung ein eindeutiger Indikator für die PTC-Oberflächentemperatur ist. Natürlich spielt der durch die Wärmeabgabe an den Luftstrom (im Normalbetrieb) auftretende Kühlungseffekt im Bereich der Heizvorrichtung eine wesentliche Rolle. Dieser schlägt sich jedoch im vorliegenden Fall durch eine entsprechende Reduktion der PTC-Oberflächentemperaturen und somit auch der von dem Temperaturfühler gemessenen Temperaturen im Normalbetrieb nieder, und nicht durch den direkten Einfluss des Luftstroms, der durch die erfindungsgemäße Anordnung des Temperatursensors weitgehend vermieden werden soll.

Der Messpunkt ist so angeordnet, dass die Messung an einem Punkt außerhalb des Luftstroms erfolgt. Dies stellt auf einfache Weise sicher, dass externe Einflüsse, die das Messergebnis beeinflussen können, weitgehend ausgeschlossen werden.

Die Heizvorrichtung umfasst einen Radiator zur Wärmeabstrahlung, vorzugsweise in Form einer Wellrippe. In unmittelbarer Nähe dieses Radiators wird ein (insbesondere von der Konvektion des Luftstroms) abgeschotteter Raum geschaffen, in welchen der Temperatursensor hineinragt. In diesem Raum entsteht durch die Wärmestrahlung insbesondere ausgehend von den Radiatoren ein Wärmestau, der dazu führt, dass die Temperatur in dem geschlossenen Raum gut mit der Oberflächentemperatur der PTC-Heizelemente korreliert. Dies ist konstruktiv besonders einfach und ermöglicht eine einfache Herstellung.

Vorzugsweise umfasst die elektrische Heizvorrichtung ein Gebläse zur Erzeugung des Luftstroms. Alternativ ist eine Erzeugung des Luftstroms außerhalb des Bereichs der elektrischen Heizvorrichtung möglich.

Vorzugsweise arbeitet die elektrische Heizvorrichtung gemäß der vorliegenden Erfindung mit einer Betriebsspannung im automobiltechnischen Hochvoltbereich. Aufgrund der speziellen Sicherheitsanforderungen und Leistungsparameter bei elektrischen Heizvorrichtungen für den Hochvoltbereich ist eine elektrische Heizvorrichtung gemäß der vorliegenden Erfindung für den Hochvoltbereich besonders geeignet.

Vorzugsweise umfasst die erfindungsgemäße Heizvorrichtung mehr als 50, weiter vorzugsweise zwischen 50 und 100, zum Beispiel 60 oder ca. 60 PTC-Heizelemente.

Vorzugsweise wird der vorbestimmte Temperaturwert (Schwellenwert) so gewählt, dass sein Überschreiten ein Indiz dafür ist, dass die Erzeugung des Luftstroms gestört ist, und eine sichere und kontinuierliche Wärmeabführung nicht mehr gewährleistet werden kann. Um Schäden durch Überhitzung zu vermeiden, muss einem drohenden Wärmestau durch entsprechende Maßnahmen entgegen gewirkt werden.

Wie bereits ausgeführt, sind erfindungsgemäß PTC-Elemente im Einsatz, bei denen PTC-Oberflächentemperaturen im Bereich von 200°C oder leicht darüber, zum Beispiel 205°C, möglich sind. Hierbei ist, wie bereits erwähnt, zu beachten, dass im Regelbetrieb durch den ständigen Wärmeaustausch mit der aufzuheizenden Luft ein erheblicher Kühlungseffekt eintritt, so dass im Regelfall die PTC- Oberflächentemperaturen deutlich unter den maximalen PTC-Oberflächentemperaturen liegen. Die gemessenen Temperaturen hängen darüber hinaus im Allgemeinen noch von der Entfernung des Messpunktes von der primären Wärmequelle (PTC-Oberfläche) ab. Dementsprechend ist der Schwellwert (vorbestimmte Temperaturwert) umso höher festzusetzen, je näher am PTC-Element sich der Messpunkt befindet.

Andererseits fällt im Fehlerfall (Lüfterausfall) mit dem Wegfall des Luftstroms automatisch auch der Kühlungseffekt weg. Dann erreichen sowohl die Oberflächentemperaturen der PTC-Heizelemente als auch die Temperaturen weiter entfernter Wärme abstrahlender Oberflächen unzulässig hohe Werte, wodurch sich das Gefahrenpotential ergibt, das durch die vorliegende Erfindung eliminiert werden soll. Entsprechend bevorzugter Ausführungsformen ist der vorbestimmte Temperaturwert größer als 70°C, vorzugsweise zwischen 70 und 120°C, weiter vorzugsweise zwischen 80 und 100°C, zum Beispiel 90°C.

Gemäß einer bevorzugten Ausführungsform erfolgt die Reduzierung der Heizleistung auf Null, wenn die gemessene Temperatur den Schwellenwert überschreitet. In diesem Fall wird also die Heizleistung ganz abgeschaltet, und bei abgeschalteter Heizung können Maßnahmen zur Störungsfeststellung bzw. -beseitigung ergriffen werden.

Vorzugsweise wird die Heizleistung im Falle festgestellter Überhitzung entweder stufenweise oder kontinuierlich reduziert.

Ebenfalls vorzugsweise ist die Überwachungseinrichtung so ausgebildet, dass sie eine Störung in der Erzeugung des Luftstroms signalisiert, wenn die Überwachungseinrichtung feststellt, dass die von dem Temperatursensor gemessene Temperatur den Schwellenwert überschreitet. Hierbei kann die Signalisierung beispielsweise durch ein akustisches oder ein optisches Signal erfolgen.

Gemäß einem weiteren bevorzugten Aspekt der vorliegenden Erfindung wird eine Kraftfahrzeuginnenraumheizung mit einer elektrischen Heizvorrichtung gemäß dem ersten Aspekt der vorliegenden Erfindung bereitgestellt.

Eine erfindungsgemäße Heizung ist jedoch alternativ auch für andere Aufgaben im Kraftfahrzeug zur Bereitstellung erforderlicher Prozesswärme zum Vorwärmen oder Warmhalten betriebswichtiger Teile, wie z. B. Batterie, einsetzbar.

Weitere vorteilhafte Ausgestaltungen sind Gegenstand der Unteransprüche.

Im Folgenden wird die vorliegende Erfindung anhand bevorzugter Ausführungsformen im Zusammenhang mit den beiliegenden Zeichnungen erläutert, in denen:
Fig. 1 ein Diagramm der in einem PTC-Heizelement umgesetzten elektrischen Leistung in Abhängigkeit von der Temperatur zeigt;
Fig. 2 Widerstands-Temperatur-Kennlinien von PTC-Elementen mit unterschiedlichen maximal erreichbaren Oberflächentemperaturen im Vergleich zeigt;
Fig. 3 ein Beispiel für den Einsatz einer erfindungsgemäßen elektrischen Heizung zeigt;
Fig. 4 beispielhaft den äußeren Aufbau einer Heizvorrichtung darstellt;
Fig. 5 eine schematische Darstellung der Anordnung eines Temperaturfühlers in einer beispielhaften Heizvorrichtung ist;
Fig. 6 eine schematische Darstellung der Anordnung eines Temperaturfühlers in einer beispielhaften Heizvorrichtung ist;
Fig. 7 eine schematische Darstellung der Anordnung eines Temperaturfühlers in einer Heizvorrichtung gemäß einer Ausführungsform der vorliegenden Erfindung ist;
Fig. 8 eine schematische Darstellung des geschichteten Aufbaus der in den Heizvorrichtungen gemäß Fig. 4 bis 7 angeordneten Heizelemente und Radiatorelemente darstellt; und

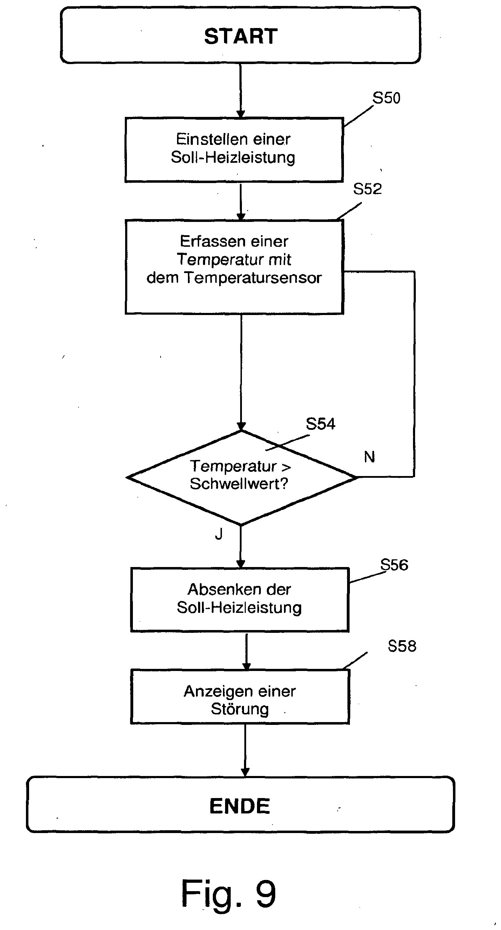

Fig. 9 ein Ablaufdiagramm für ein Verfahren gemäß der vorliegenden Erfindung darstellt.

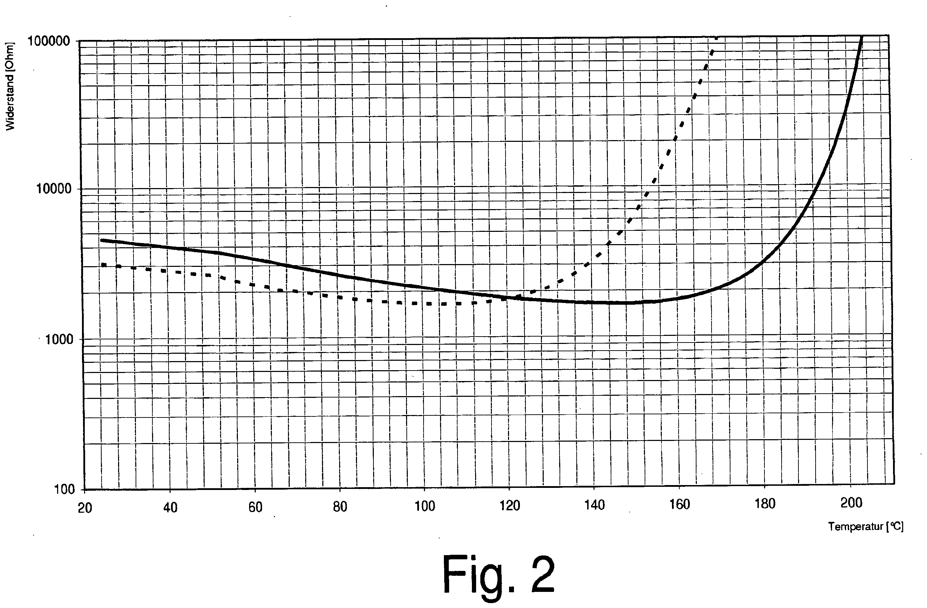

Fig. 2 stellt die Widerstands-Temperatur-Charakteristik zweier verschiedener PTC-Heizelemente im Vergleich dar. Die beiden PTC-Heizelemente unterscheiden sich durch ihre im Betrieb maximal erreichbaren Oberflächentemperaturen. Während bei dem der gestrichelten Kurve entsprechenden Heizelement die maximal erreichbare Temperatur ca. 170°C beträgt, liegt diese bei dem der durchgezogenen Kurve entsprechenden Heizelement bei ca. 205°C.

Qualitativ gesehen weisen beide Kurven einen ähnlichen Verlauf auf. Bis zu einer bestimmten (von Element zu Element verschiedenen) Temperatur ist der Verlauf der Widerstands-Temperaturkurven relativ flach. Dieser Bereich entspricht dem flach ansteigenden Bereich am linken Rand der in Fig. 1 gezeigten Kurve. Wenn die Temperatur jedoch den für das jeweilige PTC-Element individuell gültigen bestimmten Wert übersteigt, steigt der Widerstand stark an (man beachte die logarithmische Widerstandsskala in Fig. 2). Diese Temperatur wird Curie-Temperatur oder Bezugstemperatur genannt und entspricht dem Maximum auf der (ebenfalls logarithmischen) Leistungs-Temperatur-Kurve der Fig. 1. Sie liegt bei dem Heizelement mit der gestrichelten Kurve bei ca. 100°C und bei dem Heizelement mit der durchgezogenen Kurve bei ca. 150°C. Wie im Zusammenhang mit Fig. 1 erläutert, wird das PTC-Heizelement im Regelbetrieb in dem ansteigenden Abschnitt, bei einer Arbeitstemperatur betrieben, die etwas höher ist als die Bezugstemperatur. Die maximale Temperatur (oberes Ende der jeweiligen Kurve) wird im Regelbetrieb nicht erreicht, da durch den Luftstrom ständig Wärme abgeführt wird.

Im Störungsfalle jedoch, bei Ausfall des Luftstroms, versagt die Wärmeabfuhr, und der Arbeitspunkt verschiebt sich auf der Kennlinie der Fig. 2 nach oben. Bei in konventionellen Heizern verwendeten PTC-Elementen (gestrichelte Kurve) liegt die maximal erreichbare Temperatur in einem Bereich, in dem noch kein Schaden in der Umgebung auftritt. Deshalb reicht der Selbstregelungseffekt der PTC-Heizelemente bei konventionellen Heizern aus, um Schäden zu verhindern.

Im Falle von Hochvolt-Heizern werden jedoch PTC-Elemente verwendet (durchgezogene Kurve), deren maximal erreichbare Temperatur in einem Bereich liegt, in dem bereits Beschädigungen in der Umgebung auftreten können.

In diesem Fall kann man sich deshalb nicht auf den Selbstregelungseffekt des PTC-Heizelementes verlassen. Bereits Temperaturen unterhalb der maximal erreichbaren Temperatur des PTC-Elements stellen in diesem Falle eine Überhitzung dar. Eine solche Überhitzung muss sicher erkannt werden und eine weitere Erwärmung muss vermieden werden, bzw. ein Absinken der Temperatur in zulässige Bereiche eingeleitet werden.

Ziel der vorliegenden Erfindung ist es deshalb, eine PTC-Heizvorrichtung bereitzustellen, bei der unzulässig hohe Temperaturwerte, wie sie beispielsweise beim Lüfterausfall auftreten, zuverlässig erkannt werden können, obwohl diese unzulässig hohen Temperaturwerte niedriger sind, als die maximal erreichbare Oberflächentemperatur des verwendeten PTC-Elements.

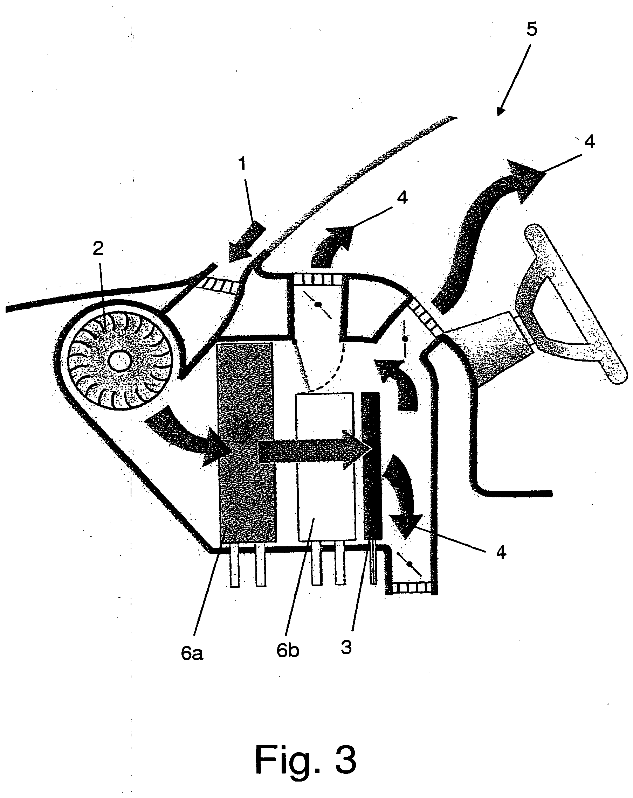

Fig. 3 zeigt den grundsätzlichen Aufbau bei der Verwendung eines erfindungsgemäßen Heizsystems zur Innenraumbeheizung eines Kraftfahrzeugs. Dabei ist das Heizsystem in eine Kfz-Klimaanlage (Heiz-/Klimagerät) integriert. Von einem Gebläse 2 wird Außenluft 1 angesaugt, und an der Heizung 3 entlang geführt. Anschließend wird die erwärmte Luft 4 dem beabsichtigten Einsatzzweck zugeführt, in dem sie in den Innenraum 5 geblasen wird. Dabei kann die Luft bei Integration in eine Klimaanlage zuvor über einen Verdampfer 6A und eine weitere Fahrzeugheizung 6B geleitet werden, bevor sie über die elektrische Heizvorrichtung 3 strömt.

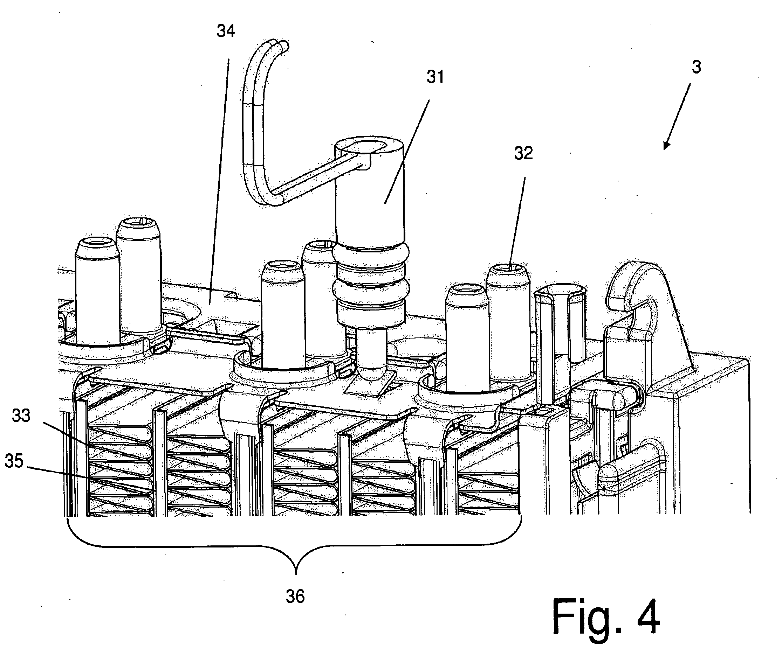

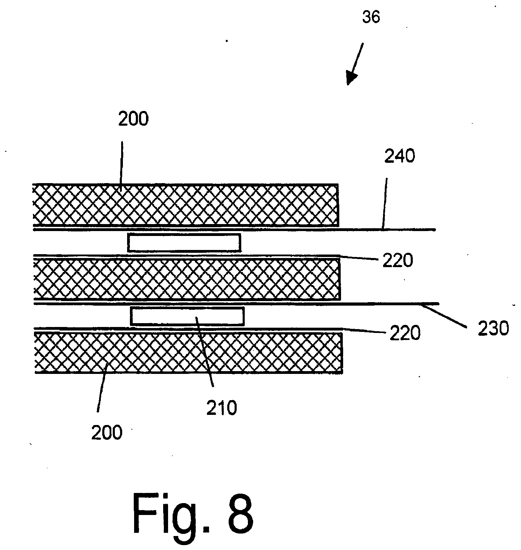

Der grundlegende mechanische Aufbau einer beispielhaften Heizvorrichtung ist in Fig. 4 dargestellt. Hierbei sind in einem geschichteten Aufbau in einem Rahmen die PTC-Elemente (im Bild nicht dargestellt) eingebaut. Die Details zum Einbau der PTC-Elemente werden weiter unten unter Bezug auf Fig. 8 erläutert. Aus dem Einbaubereich der PTC-Elemente werden Kontaktbleche 35 herausgeführt und mit Anschlüssen 32 zur Stromversorgung verbunden. Ein zusätzliches Abschirmblech 34 ist oberhalb der gesamten Rahmenkonstruktion angebracht, um leitende Teile zum Schutz vor EMV-Störungen (elektromagnetische Verträglichkeit) abzuschirmen. Zur Abgabe der Wärme an die durchströmende Luft dienen Radiatoren 33, die in der Rahmenkonstruktion jeweils zwischen Heizregistern 36 für die PTC-Heizelemente angebracht sind.

Gemäß einer im Bild dargestellten Ausführungsform sind diese Radiatoren in Form einer Mehrzahl von Wellrippen 33 ausgebildet.

Der Temperatursensor 31 kontaktiert in dem dargestellten Beispiel direkt das Abschirmblech 34.

Das Abschirmblech heizt sich durch Wärmeleitung über die metallische Verbindung mit den Radiatoren ebenfalls stark auf und strahlt somit Wärme ab. Seine Temperatur ist deshalb ein guter Indikator für die Temperatur des PTC-Heizelements und somit für das Vorliegen eines Fehlerfalls. Beim Ausfall des Luftstroms oder zu geringer Strömungsgeschwindigkeit erreicht auch das Abschirmblech aufgrund der Wärmeleitung deutlich höhere Temperaturen als im Regelbetrieb.

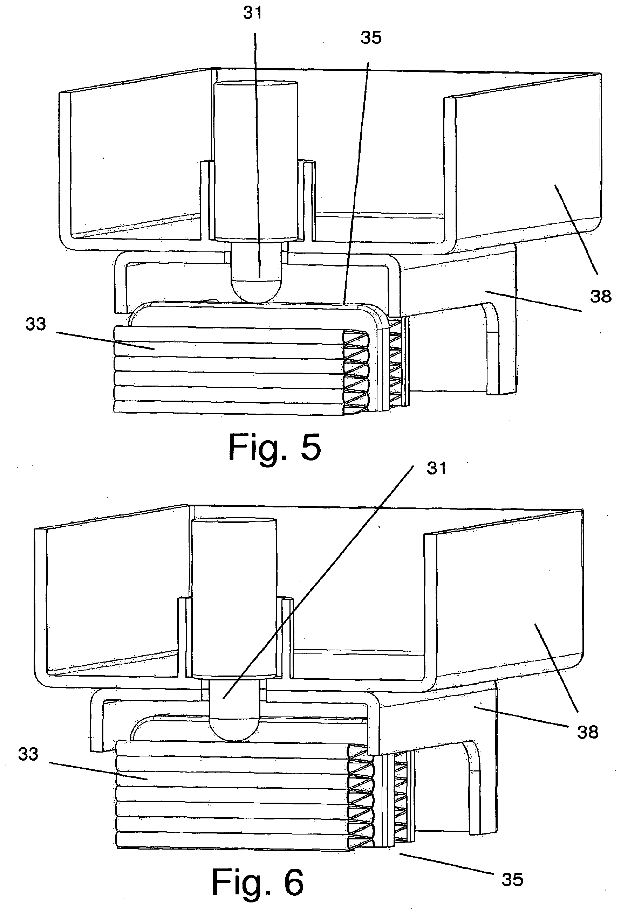

In den folgenden Schnittzeichnungen der Fig. 5 und 6 werden schematisch alternative mögliche Ausführungsformen für die Anordnung des Temperatursensors in einer Heizvorrichtung dargestellt. Hierbei bedeuten gleiche Bezugszeichen gleiche Komponenten, so dass auf deren erneute Beschreibung verzichtet wird. Die in den Fig. 5 bis 8 dargestellten Bauteile 38 sind Teile eines Gehäuses, welches vorzugsweise neben dem Heizregister auch die Komponenten der Steuerelektronik umfasst. Dieses Gehäuse ist vorzugsweise aus besonders hitzebeständigem Kunststoff gefertigt. Aus Kostengründen wird aber für von der eigentlichen Heizvorrichtung 3 weiter entfernte Komponenten des Heiz-/Klimagerätes auf solche speziellen Kunststoffe verzichtet. Wie aus den schematischen Darstellungen der Fig. 5 bis 7 weiter zu entnehmen ist, ragt der Temperaturfühler aus dem im oberen Teil der Zeichnung dargestellten Bereich des Gehäuses, in dem auch die Steuerelektronik untergebracht ist, heraus in den unmittelbaren Bereich der Temperaturmessung, der je nach Ausführungsform unterschiedlich gewählt ist. Hierdurch können die gemessenen Temperaturdaten der innerhalb der Steuerelektronik gebildeten Überwachungseinrichtung unmittelbar zur Auswertung zur Verfügung gestellt werden.

In der in Fig. 5 dargestellten Ausführungsform erfolgt der Abgriff der Temperatur mit dem Temperaturfühler 31 durch direkten Kontakt mit einem der Kontaktbleche 35. Dies hat den Vorteil einer besonders großen Nähe des Messpunktes zu den PTC-Heizelementen, und erlaubt deshalb einen besonders unverfälschten Rückschluss auf die PTC-Oberflächentemperaturen.

Eine weitere Alternative mit einer direkten Kontaktierung der Radiatoren 33 durch den Temperatursensor 31 möglich ist schematisch in Fig. 6 dargestellt.

Allen bisher beschriebenen und in Fig. 4 bis 6 gezeigten beispielhaften Ausführungsformen ist gemeinsam, dass der Temperatursensor 31 direkt eine Wärme abstrahlende Oberfläche der Heizvorrichtung kontaktiert.

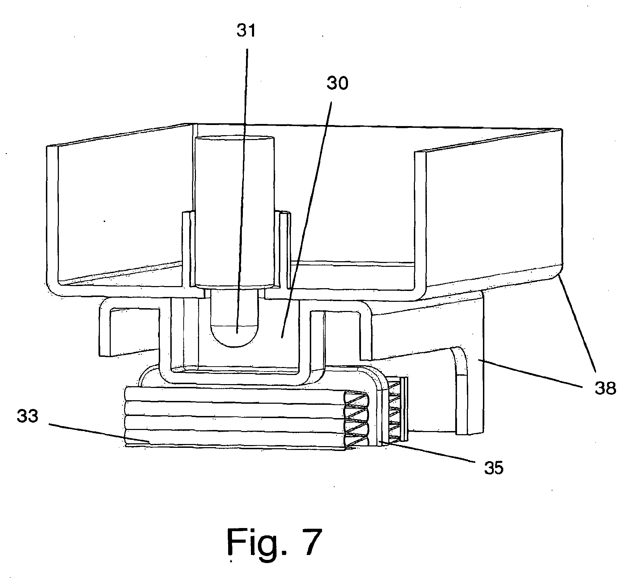

Eine erfindungsgemäße Ausführungsform, ohne Kontakt des Temperatursensors mit einer Oberfläche der Heizvorrichtung, ist in Fig. 7 dargestellt.

In Fig. 7 ragt der Temperaturfühler 31 in einen von dem Luftstrom abgeschlossenen Raum 30 oberhalb eines Teils des Radiators 33 hinein. Der geschlossene Raum 30 wurde speziell für den Zweck der Temperaturmessung geschaffen. Da dieser Raum von der Konvektion des Luftstroms abgeschlossen ist, bildet sich in ihm, bedingt durch die von der Oberfläche der Heizvorrichtung (insbesondere Radiator mit Wellrippen 33) ausgehende Wärmestrahlung, ein Wärmestau. Die Wärme staut sich umso mehr, je höher die Oberflächentemperatur der PTC-Elemente und damit die Strahlungstemperatur ist. Damit steigt auch die Temperatur in dem geschlossenen Raum 30 an.

Wenn nun zum Beispiel durch Lüfterausfall oder Verringerung der Strömungsgeschwindigkeit der Kühlungseffekt wegfällt oder sich verringert, dann steigt auch die Temperatur in dem Wärmestauraum 30 gegenüber dem Normalbetrieb entsprechend an, was von dem Temperaturfühler 31 erfasst wird. Da dieser jedoch nicht dem Luftstrom selbst ausgesetzt ist und somit nicht direkt von diesem und seinen Parametern beeinflusst wird, besteht eine gute Korrelation zur PTC-Oberflächentemperatur (die ihrerseits natürlich selbst von dem Kühlungseffekt abhängt). Die Beziehung zwischen der in dem Stauraum 30 gemessenen Temperatur und der eigentlichen PTC-Oberflächentemperatur hängt natürlich im Einzelfall noch von einer Vielzahl von Parametern ab, insbesondere hinsichtlich der Geometrie, Abstände oder auch der verwendeten Materialien. Deshalb kann hier nur eine ungefähre Größenordnung angegeben werden. Zum Beispiel kann in einer erfindungsgemäßen Vorrichtung eine in dem abgeschlossenen Stauraum 30 von dem Temperatursensor 31 festgestellte Temperatur von ca. 120°C einer PTC-Oberflächentemperatur von 190°C bis 200°C entsprechen. Da diese bereits deutlich jenseits der noch zulässigen Grenze liegt, muss rechtzeitig vorher abgeschaltet werden. Dies kann hier zum Beispiel dann erfolgen, wenn die gemessene Temperatur einen Wert im Bereich von ca. 90°C bis 100°C erreicht oder übersteigt.

Die angegebenen Zahlenwerte sind jedoch rein beispielhaft, und die Erfindung ist nicht auf solche Werte beschränkt. Entscheidend ist lediglich, dass von der gemessenen Temperatur mit hinreichender Genauigkeit auf die PTC-Oberflächentemperatur zurück geschlossen werden kann, und dementsprechend der Schwellwert der gemessenen Temperatur für das Abschalten oder zunächst das Verringern der Heizleistung festgelegt werden kann.

Der geschichtete Aufbau des Heizregisters 36 ist in Fig. 6 schematisch dargestellt. Zwischen den Radiatorelementen 200 sind PTC-Heizelemente 210 angeordnet. Die beiden gezeigten PTC-Heizelemente 210 stehen mit den Radiatorelementen 200 in Wärme leitender Verbindung. Über die Radiatorelemente 200 wird die von dem PTC-Heizelement 210 erzeugte Wärme an die durch die Radiatorelemente 200 strömende Luft abgegeben.

Auf beiden Seiten der PTC-Heizelemente 210 sind Kontaktbleche 220, 230, 240 angeordnet. Über diese Kontaktbleche wird dem PTC-Heizelement 210 Strom zugeführt. Dazu müssen nicht alle Kontaktbleche 220, 230, 240 selbst mit einem Stromanschluss versehen sein. In Fig. 6 sind zwei Kontaktbleche 230, 240 dargestellt, die aus der Heizfläche nach rechts herausgeführt sind. Die beiden herausgeführten Kontaktbleche 230, 240 können mit entgegen gesetztem Strompotential verbunden werden. Das Kontaktblech 220 wird vorzugsweise über das dazwischen liegende elektrisch leitende ausgebildete Radiatorelement 200 ebenfalls auf das Potential des Kontaktblechs 230 gelegt. Auf diese Weise genügt eine geringe Anzahl von Anschlüssen zur Stromzuführung zu den PTC-Heizelementen. Der in Fig. 6 gezeigte Aufbau stellt nur schematisch ein mögliches Anordnungsprinzip gemäß einer Ausführungsform eines erfindungsgemäßen Heizers dar. Vorzugsweise ist der Aufbau unter einer Klemmpressung gehalten, so dass ein besonders guter thermischer und elektrischer Übergang zwischen dem PTC-Heizelement 210 und den Kontaktblechen 220, 230 und 240 besteht.

Fig. 8 zeigt ein Ablaufdiagramm beim Betrieb einer erfindungsgemäßen Heizvorrichtung, bei dem eine Überhitzung, aufgrund eines Gebläseausfalls detektiert wird und entsprechende Gegenmaßnahmen ergriffen werden.

Zunächst wird im Schritt S50 eine Soll-Heizleistung der Vorrichtung eingestellt. Dies kann entweder manuell geschehen, oder automatisch durch Vorgabe des Heiz-/Klimagerätes, beispielsweise aufgrund der Auswertung bestimmter Umgebungsparameter, insbesondere einer Temperatur und von Vorgaben eines Benutzers.

Nach dem Start des Betriebs der Heizvorrichtung wird die Temperatur der PTC-Heizelemente mit Hilfe eines erfindungsgemäßen Temperatursensors 31 permanent überwacht (Schritt S52). Hierbei stellt eine Überwachungseinrichtung im Schritt S54 fest, ob die gemessene Temperatur einen vorgegebenen Schwellwert überschreitet (Schritt S54). Solange dies nicht der Fall ist (S54:N) stellt die Überwachungseinrichtung fest dass ein normaler Betriebszustand vorliegt, und kein Eingreifen erforderlich ist. Der Temperatursensor erfasst weiterhin laufend die Temperatur (S52).

Sobald jedoch eine Erhöhung der Temperatur oberhalb des vorgegebenen Schwellwertes festgestellt wird (S54:J), stellt die Überwachungseinrichtung fest, dass eine unzulässig hohe Betriebstemperatur vorliegt. In diesem Fall ist von einer Unterbrechung oder Verlangsamung des Luftstroms, insbesondere von einem Lüfterausfall auszugehen. In diesem Fall geht das Verfahren über zum Schritt S56, in welchem die im Schritt S50 vorgegebene (eingestellte) Soll-Heizleistung abgesenkt wird. Vorzugsweise kann das Absenken der Soll-Heizleistung im Schritt S56 auf 0 erfolgen, die Heizleistung also komplett abgeschaltet werden. Dies kann z. B. stufenweise oder kontinuierlich erfolgen. Gemäß einer bevorzugten Ausführungsform wird weiterhin im Schritt S58 das Vorliegen einer Störung, z. B. durch ein akustisches und/oder optisches Signal angezeigt.

Zusammenfassend, betrifft die vorliegende Erfindung eine elektrische Kraftfahrzeugheizung mit PTC-Elementen zur Erwärmung eines Luftstroms, bei der eine unzulässige Erwärmung (Überhitzung) der PTC-Heizelemente zuverlässig festgestellt werden kann, auch wenn aufgrund der individuellen Charakteristik der verwendeten PTC-Heizelemente bei dieser Temperatur noch kein selbsttätiges Abregeln erfolgt. Hierfür erfolgt ein Temperaturabgriff mittels eines Temperatursensors derart, dass nicht die Temperatur des Luftstroms, sondern die Strahlungstemperatur der PTC-Heizelemente selbst überwacht wird. Eine erfindungsgemäße Heizvorrichtung ist insbesondere auch im automobiltechnischen Hochvoltbereich geeignet, wie dies bei Elektro- oder Hybridfahrzeugen der Fall ist.

## Patentansprüche

1. Elektrische Heizvorrichtung für ein Kraftfahrzeug, wobei die Heizvorrichtung umfasst
eine Mehrzahl von Heizelementen (210) zur Erwärmung eines Luftstroms (4),
eine Wellrippe (33) als Radiator zur Wärmeabstrahlung,
einen Temperatursensor (31) innerhalb der Heizvorrichtung zum Messen einer Temperatur zur indirekten Bestimmung der Oberflächentemperatur der Heizelemente (210), basierend auf Wärmestrahlung und/oder Wärmeleitung,
eine Überwachungseinrichtung zum Überwachen, ob eine von dem Temperatursensor (31) gemessene Temperatur einen vorbestimmten Temperaturwert überschreitet, und
eine Steuereinrichtung zum Reduzieren der Heizleistung, wenn die Überwachungseinrichtung feststellt, dass die von dem Temperatursensor (31) gemessene Temperatur den vorbestimmten Temperaturwert überschreitet,
**dadurch gekennzeichnet, dass**
die Heizelemente (210) PTC-Heizelemente sind, die so ausgelegt sind, dass sie eine maximale Oberflächentemperatur von 180°C oder mehr erreichen können, und
der Temperatursensor in einen von dem Luftstrom abgeschlossenen Raum (30) in unmittelbarer Nähe der Wellrippe (33) hineinragt, so dass die Messung (S52) an einem Punkt außerhalb des Luftstroms (4) erfolgt.

2. Elektrische Heizvorrichtung nach Anspruch 1, wobei die PTC-Heizelemente (210) für eine Betriebsspannung im automobiltechnischen Hochvoltbereich ausgelegt sind.

3. Elektrische Heizvorrichtung nach Anspruch 1 oder 2, wobei die Steuereinrichtung die Heizleistung auf Null reduziert, wenn die Überwachungseinrichtung feststellt, dass die von dem Temperatursensor (31) gemessene Temperatur den vorbestimmten Temperaturwert überschreitet.

4. Elektrische Heizvorrichtung nach einem der Ansprüche 1 bis 3, wobei die Heizleistung stufenweise reduziert wird.

5. Elektrische Heizvorrichtung nach einem der Ansprüche 1 bis 3, wobei die Heizleistung kontinuierlich reduziert wird.

6. Elektrische Heizvorrichtung nach einem der Ansprüche 1 bis 5, wobei der vorbestimmte Temperaturwert größer als 70°C ist.

7. Elektrische Heizvorrichtung nach Anspruch 6, wobei der vorbestimmte Temperaturwert im Bereich von 80°C bis 100°C liegt.

8. Elektrische Heizvorrichtung nach einem der Ansprüche 1 bis 7, wobei die Überwachungseinrichtung eine Störung eines Gebläses (2) zum Erzeugen des Luftstroms (4), signalisiert, wenn die Überwachungseinrichtung feststellt, dass die von dem Temperatursensor (31) gemessene Temperatur den vorbestimmten Temperaturwert überschreitet.

9. Kraftfahrzeuginnenraumheizung mit einer elektrischen Heizvorrichtung nach einem der Ansprüche 1 bis 8.

10. Verfahren zum Überwachen einer elektrischen Heizvorrichtung (3) für ein Kraftfahrzeug mit einer Mehrzahl von Heizelementen (210) zur Erwärmung eines Luftstroms (4), und einer Wellrippe (33) als Radiator zur Wärmeabstrahlung,
wobei das Verfahren die Schritte umfasst
Messen (S52) einer Temperatur innerhalb der Heizvorrichtung (3) zur indirekten Bestimmung der Oberflächentemperatur der Heizelemente durch einen Temperatursensor (31) basierend auf Wärmestrahlung und/oder Wärmeleitung,
Überwachen (S54), ob eine von dem Temperatursensor (31) gemessene Temperatur einen vorbestimmten Temperaturwert überschreitet, und
Reduzieren (S56) der Heizleistung, wenn die gemessene Temperatur den vorbestimmten Temperaturwert überschreitet,
**dadurch gekennzeichnet, dass**
die Heizelemente (210) PTC-Heizelemente sind, die so ausgelegt sind, dass sie eine maximale Oberflächentemperatur von 180°C oder mehr erreichen können, und
der Temperatursensor in einen von dem Luftstrom abgeschlossenen Raum (30) in unmittelbarer Nähe der Wellrippe (33) hineinragt, so dass die Messung (S52) an einem Punkt außerhalb des Luftstroms (4) erfolgt.

## Claims

1. Electric heating device for a motor vehicle, which heating device comprises
a plurality of heating elements (210) for heating an air flow (4),
a corrugated fin (33) serving as a radiator for radiating heat,
a temperature sensor (31) inside the heating device for measuring a temperature for indirectly determining the surface temperature of the heating elements (210), based on thermal radiation and/or thermal conduction,
a monitoring system for monitoring whether a temperature measured by the temperature sensor (31) exceeds a predefined temperature value, and
a control system for reducing the heat output if the monitoring system ascertains that the temperature measured by the temperature sensor (31) exceeds the predefined temperature value,
**characterised in that**
the heating elements (210) are PTC heating elements which are designed to be capable of reaching a maximum surface temperature of 180°C or more, and
the temperature sensor extends into a space (30) closed off from the air flow in the immediate vicinity of the corrugated fin (33) so that the measurement (S52) is taken at a point outside the air flow (4).

2. Electric heating device as claimed in claim 1, wherein the PTC heating elements (210) are designed for an operating voltage which in automotive engineering is in the high voltage range.

3. Electric heating device as claimed in claim 1 or 2, wherein the control system reduces the heat output to zero if the monitoring system ascertains that the temperature measured by the temperature sensor (31) exceeds the predefined temperature value.

4. Electric heating device as claimed in one of claims 1 to 3, wherein the heat output is reduced in stages.

5. Electric heating device as claimed in one of claims 1 to 3, wherein the heat output is reduced continuously.

6. Electric heating device as claimed in one of claims 1 to 5, wherein the predefined temperature value is greater than 70°C.

7. Electric heating device as claimed in claim 6, wherein the predefined temperature value is in the range of 80°C to 100°C.

8. Electric heating device as claimed in one of claims 1 to 7, wherein the monitoring system signals a fault of a fan (2) for generating the air flow (4) if the monitoring system ascertains that the temperature measured by the temperature sensor (31) exceeds the predefined temperature value.

9. Heating system for a motor vehicle interior having an electric heating device as claimed in one of claims 1 to 8.

10. Method of monitoring an electric heating device (3) for a motor vehicle comprising a plurality of heating elements (210) for heating an air flow (4) and a corrugated fin (33) serving as a radiator for radiating heat,
which method comprises the following steps
measuring (S52) a temperature inside the heating device (3) for indirectly determining the surface temperature of the heating elements by means of a temperature sensor (31) based on thermal radiation and/or thermal conduction,
monitoring (S54) whether a temperature measured by the temperature sensor (31) exceeds a predefined temperature value, and
reducing (S56) the heat output if the measured temperature exceeds the predefined temperature value,
**characterised in that**
the heating elements (210) are PTC heating elements which are designed to be capable of reaching a maximum surface temperature of 180°C or more, and
the temperature sensor extends into a space (30) closed off from the air flow in the immediate vicinity of the corrugated fin (33) so that the measurement (S52) is taken at a point outside the air flow (4).

## Revendications

1. Dispositif de chauffage électrique pour un véhicule automobile, le dispositif de chauffage comprenant
une pluralité d'éléments chauffants (210) pour échauffer un flux ou écoulement d'air (4),
une ailette ondulée (33) en tant que radiateur pour rayonner la chaleur,
un capteur de température (31) à l'intérieur du dispositif de chauffage, pour mesurer une température en vue d'une détermination indirecte de la température de surface des éléments chauffants (210), se basant sur le rayonnement calorifique et/ou la conduction thermique,
un système de veille pour surveiller si une température mesurée par le capteur de température (31) dépasse une valeur de température prédéterminée, et
une unité de commande pour réduire la puissance de chauffe, lorsque le système de veille constate que la température mesurée par le capteur de température (31) dépasse ladite valeur de température prédéterminée,
**caractérisé en ce que**
les éléments chauffants (210) sont des éléments chauffants dits PTC (à coefficient de température positif), qui sont configurés de manière à pouvoir atteindre une température de surface maximale de 180°C ou davantage, et
le capteur de température s'engage à l'intérieur d'une chambre (30) fermée par rapport au flux d'air, à proximité directe de l'ailette ondulée (33), de sorte que la mesure (S52) s'effectue en un point en-dehors du flux d'air (4).

2. Dispositif de chauffage électrique selon la revendication 1, dans lequel les éléments chauffants PTC (210) sont configurés pour une tension de fonctionnement située dans le domaine des hauts-voltages de la technologie automobile.

3. Dispositif de chauffage électrique selon la revendication 1 ou la revendication 2, dans lequel l'unité de commande réduit la puissance de chauffe à zéro lorsque le système de veille constate que la température mesurée par le capteur de température (31) dépasse ladite valeur de température prédéterminée.

4. Dispositif de chauffage électrique selon l'une des revendications 1 à 3, dans lequel la puissance de chauffe est réduite par paliers.

5. Dispositif de chauffage électrique selon l'une des revendications 1 à 3, dans lequel la puissance de chauffe est réduite de manière continue.

6. Dispositif de chauffage électrique selon l'une des revendications 1 à 5, dans lequel ladite valeur de température prédéterminée est supérieure à 70°C.

7. Dispositif de chauffage électrique selon la revendication 6, dans lequel ladite valeur de température prédéterminée se situe dans la plage de 80°C à 100°C.

8. Dispositif de chauffage électrique selon l'une des revendications 1 à 7, dans lequel le système de veille signale une perturbation d'un ventilateur (2) pour produire le flux d'air (4), lorsque le système de veille constate que la température mesurée par le capteur de température (31) dépasse ladite valeur de température prédéterminée.

9. Système de chauffage d'habitacle intérieur de véhicule automobile, comprenant un dispositif de chauffage électrique selon l'une des revendications 1 à 8.

10. Procédé pour surveiller un dispositif de chauffage électrique (3) destiné à un véhicule automobile et comprenant une pluralité d'éléments chauffants (210) pour échauffer un flux ou écoulement d'air (4), et une ailette ondulée (33) en tant que radiateur pour rayonner la chaleur,
le procédé présentant les étapes suivantes consistant à :
mesurer (S52) une température à l'intérieur du dispositif de chauffage (3), en vue de la détermination indirecte de la température de surface des éléments chauffants au moyen d'un capteur de température (31), se basant sur le rayonnement calorifique et/ou la conduction thermique,
surveiller (S54) si une température mesurée par le capteur de température (31) dépasse une valeur de température prédéterminée, et
réduire (S56) la puissance de chauffe, lorsque la température mesurée dépasse ladite valeur de température prédéterminée,
**caractérisé en ce que**
les éléments chauffants (210) sont des éléments chauffants dits PTC (à coefficient de température positif), qui sont configurés de manière à pouvoir atteindre une température de surface maximale de 180°C ou davantage, et
le capteur de température s'engage à l'intérieur d'une chambre (30) fermée par rapport au flux d'air, à proximité directe de l'ailette ondulée (33), de sorte que la mesure (S52) s'effectue en un point en-dehors du flux d'air (4).
